# EUROPÄISCHE PATENTSCHRIFT

(11) **EP 3 091 830 B1**
(45) Veröffentlichungstag und Bekanntmachung des Hinweises auf die Patenterteilung: **21.02.2018**
(21) Anmeldenummer: 14844979.6
(22) Anmeldetag: 30.12.2014
(51) Int. Cl.: A01G 23/095

(54) **VORRICHTUNG ZUM ENTASTEN LEBENDER BÄUME**
MACHINE FOR DEBRANCHING LIVING TREES
DISPOSITIF D'ÉBRANCHAGE D'ARBRES VIVANTS

(30) Priorität: 06.01.2014 DE 102014100054
(43) Veröffentlichungstag der Anmeldung: 16.11.2016
(73) Patentinhaber: advaligno GmbH, 88045 Friedrichshafen (DE)
(72) Erfinder: JORDAN, Ernst, 31535 Neustadt (DE)
(74) Vertreter: Kruspig, Volkmar
(86) Internationale Anmeldenummer: PCT/DE2014/100468
(87) Internationale Veröffentlichungsnummer: WO 2015/101374

(56) Entgegenhaltungen:
- WO-A1-2010/024747
- DE-A1- 3 505 752
- US-A1- 2013 299 046

## Beschreibung

Die Erfindung betrifft eine Vorrichtung zum Entasten lebender Bäume.

Das Entasten lebender Bäume, auch als Wertästung oder Ästung bezeichnet, insbesondere das Entasten von Nadelbäumen ist sowohl für die Forstwirtschaft als auch für die Holz- und Möbelindustrie von Bedeutung.

Für die Holzverarbeitung werden astreine Baumstämme angestrebt. Durch die Ästung wird ein erheblicher Wertgewinn erzielt, weil die Erzeugung von astfreiem Schnittholz möglich ist.

Überwiegend kommt die Entastung bei Kiefern und Fichten in Betracht, und wenn diese einmal entastet sind, wachsen Sie über viele Jahre hinweg weiter und verbreitern dabei Ihren Durchmesser, jedoch ohne die zuvor entfernten Äste. Nach dem Fällen der gewachsenen Bäume steht somit das gewünschte astfreie Holzmaterial für die Herstellung von Möbeln zur Verfügung.

Die Entastung eines Baumes wird nur einmalig durchgeführt. Zum Zeitpunkt der Entastung liegt der mittlere Durchmesser der Bäume bei etwa 30 cm, während der Durchmesser im Endzustand beim Abholzen des Baumes über 1 m betragen kann. Üblicherweise erfolgt das Entasten im unteren Bereich der Bäume bis zu einer Höhe von über 10 m über dem Erdboden.

Es ist schon seit längerer Zeit bekannt, die Entastung maschinell durchzuführen. In dem Dokument DE 101 24 611 B4 ist eine Entastungsvorrichtung zum Entfernen der Äste von lebenden Bäumen beschrieben, die zum Entfernen der Äste eine Sägeeinheit umfasst, die aus drei separaten Kreissägen mit jeweils einem eigenen Antriebsmotor besteht. Die Sägeeinheit ist dabei auf einem Rahmengestellt angeordnet.

Die bekannte Vorrichtung umfasst ferner Antriebsketten in Form von breiten mit einer glatten Oberfläche versehenen Riemen. Mit Hilfe dieser Antriebsketten, die mit Druck am Baum anliegen, fährt die Vorrichtung selbständig am Baumstamm nach oben, wobei die Äste mittels der Sägeeinheit entfernt werden.

Damit alle Äste über den gesamten Umfang des Baumstammes erfasst werden, pendelt die Sägeeinheit in horizontaler Richtung oszillierend um den Baumstamm. Wenn das Rahmengestell mit der Sägeeinheit die gewünschte Höhe erreicht hat, fährt es am Baumstamm wieder nach unten.

Wegen des sperrigen Rahmengestells und wegen der drei einzelnen Kreissägen mit jeweils einem zugeordneten eigenen Antriebsmotor ist die bekannte Vorrichtung als aufwendig und reparaturanfällig anzusehen. Wenn beispielsweise nur ein Antriebsmotor für eine Kreissäge beim robusten Betrieb im Wald ausfällt, ist die gesamte Vorrichtung nicht mehr arbeitsfähig. Zudem ist die Vorrichtung wegen der vielen Einzelteile nicht nur reparaturanfällig, sondern auch teuer und vergleichsweise schwer, wodurch die Handhabung durch Bedienungspersonen erschwert ist.

Durch die oszillierende Bewegung der einzelnen Kreissägen in horizontaler Richtung wird zudem die Geschwindigkeit begrenzt, mit welcher die Vorrichtung den Baumstamm herauffahren kann. Bei zu hoher Geschwindigkeit besteht die Gefahr, dass nicht alle Äste des Baumstammes erfasst werden, d.h., die erforderliche oszillierende Bewegung der Kreissägen bremst die Geschwindigkeit und damit den Wirkungsgrad der Vorrichtung.

Durch das Dokument DE 35 05 752 A1 ist eine Schneidvorrichtung für das Entfernen von Ästen von lebenden Bäumen bekannt, bei der keine Sägen, sondern zwei etwa halbkreisförmig ausgebildete schräg ziehende Messer verwendet werden. Die Messer stehen unter der Einwirkung einer Federkraft, durch welche sie an den Baumstamm gedrückt werden.

Eine Besonderheit dieser bekannten Vorrichtung besteht darin, dass eine im Abstand vom Baumstamm befindliche hydraulische Hubvorrichtung vorgesehen ist, mit welcher die beiden zum Entfernen der Äste vorgesehenen Messer zunächst nach oben und anschließend wieder nach unten bewegt werden. Da der Antrieb der Schneidvorrichtung nicht über mit Druck an der Baumrinde anliegenden Antriebsketten erfolgt, ist eine Druckeinwirkung auf die Baumrinde vermieden. Eine Druckeinwirkung auf die Baumrinde kann sich in nachteiliger Weise auf den durch die Baumrinde stattfindenden Saftfluss des Baumes in auswirken und bei einer Beschädigung der Baumrinde den Saftfluss unterbrechen.

Der Saftfluss durch die Baumrinde setzt im Frühjahr ein und dauert bis zum späten Herbst. Die bekannten Vorrichtungen, bei denen die Antriebsketten oder andere Antriebsmittel mit Druck an der Baumrinde anliegen und diese unter Umständen beschädigen können, lassen eine sichere Entastung deshalb nur innerhalb des relativ kurzen Winterzeitraumes zu, wenn das Risiko der Unterbrechung des Saftflusses vermieden werden soll.

Trotz des Verzichts auf mit Druck an der Baumrinde anliegenden Antriebsketten haften der bekannten Vorrichtung mehrere Nachteile an. So ist der Transport der relativ schweren hydraulischen Hubvorrichtungen mit den beiden Messern von Baum zu Baum umständlich und aufwendig.

Ein weiterer Nachteil liegt darin, dass die nach oben verlaufende Bewegung der Messer von der exakten Aufstellung und Anordnung der Hubvorrichtung auf dem Erdboden abhängig ist und allein durch die Hubbewegung der Hydraulikvorrichtung vorgegeben ist. Wenn die Hydraulikvorrichtung nicht so ausgerichtet ist, dass die Messer beim Hochfahren genau dem Verlauf des Baumstammes folgen, besteht die Gefahr, dass die Messer nicht nur die Äste entfernen, sondern auch Teile der Baumrinde. Um dies zu vermeiden, muss die hydraulische Hubvorrichtung so neben dem Baum positioniert werden, dass die Hubbewegung immer parallel zum Baumstamm verläuft.

Die Führung der Messer ist durch die senkrecht nach oben gerichtete Bewegung der Hubvorrichtung starr vorgegeben. Die Messer können daher eventuellen wenn auch nur geringfügigen Abweichungen des Baumstammes von der starr vorgegebenen senkrechten Richtung nicht folgen, und bei solchen möglichen Abweichungen des Verlaufes des Baumstammes wird die Baumrinde durch die Messer beschädigt.

Durch das Dokument US 2013 / 0 299 046 A1 ist eine Vorrichtung zum Entasten lebender Bäume mit mindestens einer Schneidvorrichtung zum Abschneiden und Entfernen der Äste der Bäume, mit einem Grundkörper mit einem eigenen Antrieb, mit einem Motor sowie mit in ihrer Arbeitsstellung am Baumstamm anliegenden Antriebsmitteln bekannt, wobei die Vorrichtung selbständig am Baumstamm des Baumes herauf- und herunter fahren kann.

Die Schneidvorrichtung umfasst eine erste untere Haltevorrichtung und eine zweite darüber befindliche obere Schneidvorrichtung. Die untere Haltevorrichtung umfasst zwei einander gegenüberliegend angeordnete, kreisförmig verlaufende Arme, die in vertikaler Richtung versetzt angeordnet sind, wobei die beiden Arme der unteren Haltevorrichtung zusammen einen Kreisbogen bilden, der einen ersten Teil des Umfanges des Baumstammes umfasst, wobei sich die Endbereiche der beiden Arme in ihrer Arbeitsstellung wegen der versetzten Anordnung der beiden Arme überlappen können, wobei die Endbereiche der beiden in vertikaler Richtung gesehen übereinander liegen.

Die obere Schneidvorrichtung umfasst zwei einander gegenüberliegend angeordnete ebenfalls kreisförmig verlaufende Messer, und in der Mitte zwischen den beiden Messern der oberen Schneidvorrichtung ist ein drittes Messer oberhalb der beiden Messer der oberen Schneidvorrichtung angeordnet. Die drei Messer der oberen Schneidvorrichtung bilden zusammen einen Kreisbogen, der einen zweiten Teil des Umfanges des Baumstammes umfasst, so dass der gesamte Umfang des Baumstammes an jeder Stelle entlang des zu entastenden Bereiches durch die Messer der oberen Schneidvorrichtung erfasst ist.

Diese bekannte Vorrichtung besitzt jedoch kein in seiner Arbeitsstellung am Baumstamm anliegendes Stützrad. Außerdem erstrecken sich die Messer der oberen Schneidvorrichtung sich nicht in einer gleichen Ebene, und die untere Haltevorrichtung ist nicht als Schneidvorrichtung ausgebildet.

Der Erfindung liegt die Aufgabe zugrunde, eine Vorrichtung zum Entasten lebender Bäume zu schaffen, mit der sich eine schädliche Einwirkung auf die Baumrinde vermeiden lässt. Daneben soll die Vorrichtung leicht handhabbar sein und große Geschwindigkeiten ermöglichen, mit denen die Vorrichtung am Baumstamm rauf und runter gefahren wird, um so einen verbesserten Wirkungsgrad verbunden mit einer besseren Wirtschaftlichkeit zu ermöglichen. Außerdem soll die Vorrichtung einen ganzjährigen Einsatz zum Entasten ermöglichen, ohne Beeinflussung des Saftflusses durch die Baumrinde.

Die Lösung dieser Aufgabe erfolgt bei der angegebenen Vorrichtung durch die Kombination von den im Anspruch 1 genannten Merkmalen. Die erfindungsgemäße Vorrichtung umfasst eine erste untere Schneidvorrichtung und eine zweite darüber befindliche obere Schneidvorrichtung. Die untere Schneidvorrichtung besitzt zwei einander gegenüberliegend angeordnete kreisförmig verlaufende Messer, die in vertikaler Richtung versetzt angeordnet sind.

Die beiden Messer der unteren Schneidvorrichtung bilden zusammen einen Kreisbogen, der einen ersten Teil des Umfanges des Baumstammes umfasst, wobei sich die Endbereiche der beiden Messer in ihrer Arbeits- und Schneidstellung wegen der versetzten Anordnung der beiden Messer überlappen können, wobei die Endbereiche der beiden Messer dann in vertikaler Richtung gesehen übereinander liegen.

Die obere Schneidvorrichtung besitzt zwei einander gegenüber liegend angeordnete ebenfalls kreisförmig verlaufende Messer, die jedoch nicht in vertikaler Richtung versetzt sind, sondern sich in gleicher Ebene erstrecken. In der Mitte zwischen den beiden Messern der oberen Schneidvorrichtung ist zusätzlich ein drittes Messer oberhalb der beiden Messer der oberen Schneidvorrichtung angeordnet.

Die drei Messer der oberen Schneidvorrichtung bilden zusammen einen Kreisbogen, der einen zweiten Teil des Umfanges des Baumstammes umfasst, so dass der gesamte Umfang des Baumstammes an jeder Stelle entlang des zu entastenden Bereiches durch die Messer der unteren und oberen Schneidvorrichtung erfasst ist.

Die Erfindung geht davon aus, dass die Äste in der Regel in einer waagerechten Ebene ringförmig um den Baumstamm herum wachsen. Wenn die erfindungsgemäße Vorrichtung daher am Baum nach oben fährt, werden die Äste wegen der vorgesehenen zwei Schneidvorrichtungen von den einzelnen Messern in vier Stufen abgeschnitten und entfernt.

Zuerst kommt das in vertikaler Richtung gesehen oberste dritte Messer der oberen Schneidvorrichtung zur Wirkung. Dann folgen die beiden anderen auf gleicher Höhe angeordneten Messer der oberen Schneidvorrichtung, welche einen Teil des Umfanges des Baumes abdeckt und somit die auf diesem Teil befindlichen Äste entfernt.

Danach kommt die untere Schneidvorrichtung zur Wirkung, die den noch fehlenden Teil des Umfanges des Baumstammes abdeckt, und welche zunächst mit ihrem einen in vertikaler Richtung oberen Messer eingreift. Dann folgt als Letztes das andere nach unten versetzt angeordnete Messer der unteren Schneidvorrichtung.

Es ist ersichtlich, dass bei der Vorrichtung die in einer waagerechten Ebene ringförmig gewachsenen Äste nicht alle auf einmal, sondern nacheinander in Stufen entfernt werden. Dies erfordert weniger Kraft als sie benötigt wird, wenn man alle Äste in einer Ebene auf einmal abschneiden würde. Der Antrieb der erfindungsgemäßen Vorrichtung kann daher weniger leistungsstark ausgebildet werden und ermöglicht es gleichwohl, die Vorrichtung mit vergleichsweise großer Geschwindigkeit am Baumstamm herauf und herab zu fahren, wodurch der Wirkungsgrad erhöht wird.

Bei der Erfindung sind die beiden Messer der unteren Schneidvorrichtung in vertikaler Richtung zueinander versetzt angeordnet. Dies ist von Vorteil, weil dadurch berücksichtigt wird, dass sich der Durchmesser der Bäume von unten nach oben hin verjüngt. Unten sind die Bäume dicker als oben. Der Unterschied im Durchmesser kann hierbei bis zu 10 cm betragen.

Wenn sich die Enden der beiden Messerhälften daher beim Hochfahren wegen des kleiner werdenden Durchmessers aufeinander zu bewegen, ist durch die versetzte Anordnung sichergestellt, dass sich die Enden der Messer problemlos überlappen können, ohne sich zu berühren, was der Fall wäre, wenn die beiden Messer in einer gleichen Ebene angeordnet wären.

Es hat sich gezeigt, dass das Gewicht der erfindungsgemäßen Vorrichtung relativ gering ist, so dass der Anpressdruck des Antriebs gegen die Baumrinde ebenfalls gering gehalten werden kann. Dadurch lässt sich eine Beschädigung der Baumrinde vermeiden, so dass die Vorrichtung auch ganzjährig eingesetzt werden kann, ohne dass der Saftfluss unterbrochen wird.

Eine zweckmäßige Ausgestaltung der Erfindung sieht vor, dass die beiden einander gegenüber liegenden Messer der unteren und oberen Schneidvorrichtung in eine vom Baumstamm wegweisende Ruhestellung verschwenkbar und arretierbar sind und in eine Arbeitsstellung verschwenkbar sind, in welcher sie durch eine Kraft gegen den Baumstamm gedrückt werden.

Wenn sich die beiden Schneidvorrichtungen in ihrer Ruhestellung befinden, kann die Vorrichtung an den Baumstamm gestellt werden. Anschließend werden die Messer dann in die Arbeitsstellung verschwenkt, in welcher sie durch eine Kraft gegen den Baumstamm gedrückt werden und danach kann mit Hilfe des Antriebes die Vorrichtung zum Entasten am Baumstamm nach oben fahren. Wenn die Entastung eines Baumstammes fertig ist und die Vorrichtung wieder nach unten heruntergefahren ist, können die Messer wieder verschwenkt und in ihre Ruhestellung arretiert werden, und die Vorrichtung kann von dem betreffenden Baum entfernt und zum nächsten Baum gebracht werden.

Eine weitere vorteilhafte Ausgestaltung der Erfindung sieht vor, dass das dritte Messer der oberen Schneidvorrichtung starr zwischen den beiden verschwenkbaren Messern der oberen Schneidvorrichtung angeordnet ist, und dass die drei Messer der oberen Schneidvorrichtung als eine Einheit als Ganzes in horizontaler Richtung verschwenkbar sind.

In der Praxis ist zu beobachten, dass die Bäume nicht immer exakt in einer senkrechten Richtung nach oben wachsen, sondern geringfügige Abweichungen bzw. Krümmungen aufweisen. Wenn beim Hochfahren der Vorrichtung eine solche Krümmung vorhanden ist, kann sich die obere Schneidvorrichtung dieser Krümmung anpassen und sich in Richtung der Krümmung vom Baumstamm waagerecht wegbewegen, wodurch eine Beschädigung der Baumrinde vermieden wird. Die horizontale Bewegung der Schneidvorrichtung erfolgt entgegen der Federkraft der den Messern zugeordneten Federn, und wenn die Vorrichtung die Krümmung passiert hat, werden die Messer wieder in entgegen gesetzter Richtung gegen den Baumstamm gedrückt. Die horizontale Beweglichkeit der oberen Schneidvorrichtung ist somit ein gravierender Vorteil der Erfindung.

Eine andere zweckmäßige Weiterbildung der Erfindung besteht darin, dass die Messer der unteren und oberen Schneidvorrichtung auf ihrer dem Baumstamm zugewandten Innenseite mindestens einen Distanzhalter aufweisen, durch welchen die Messer in einem geringen Abstand von dem Baumstamm gehalten werden. Durch die Distanzhalter ist sichergestellt, dass die Baumrinde während der Entastung nicht beschädigt wird.

In weiterer zweckmäßiger Ausgestaltung der Erfindung sind die Distanzhalter lösbar und auswechselbar an den Messern befestigt. Dadurch ist es möglich, den Abstand zwischen der Baumrinde und den Messern je nach Bedarf unterschiedlich einzustellen. Zweckmäßig ist es, wenn der Abstand der Messer von dem Baumstamm etwa 3 - 5 mm beträgt.

In vorteilhafter Weise sind die Messer der unteren oder oberen Schneidvorrichtung auswechselbar am Grundkörper der Vorrichtung angeordnet. Wenn die Messer nach längerem Gebrauch stumpf sind, können sie somit durch scharfe Messer ersetzt werden, und die stumpfen Messer können daneben neu geschliffen werden.

In zweckmäßiger Ausgestaltung der Erfindung sind die Antriebsmittel durch zwei im Abstand parallel am Grundkörper befestigte Riemenantriebe gebildet, die von einem gemeinsamen am Grundkörper angeordneten Hydraulikmotor angetrieben sind und mit Druck gegen den Baumstamm gedrückt werden.

Für beide Riemenantriebe ist also nur ein gemeinsamer Hydraulikmotor vorgesehen, wodurch sich in vorteilhafter Weise das Gewicht der erfindungsgemäßen Vorrichtung verringern lässt. Die Riemenantriebe können mit einer großen Auflagefläche ausgestaltet sein, wodurch der Anpressdruck gegen die Baumrinde verringert wird.

Bei der Erfindung ist es zweckmäßig, dass der Hydraulikmotor über eine flexible Hydraulikleitung von einem Traktor aus mit dem erforderlichen Hydrauliköl und Druck versorgt wird.

Eine andere Weiterbildung der Erfindung sieht vor, dass die Riemen der beiden Riemenantriebe profiliert ausgebildet und mit waagerecht verlaufenden Vertiefungen versehen sind. Durch die Profilierung wird ein sicheres Herauf- und Herunterfahren der Vorrichtung längs des Baumstammes erreicht.

Eine andere vorteilhafte Weiterbildung der Erfindung besteht darin, dass das Stützrad verschwenkbar am Grundkörper befestigt ist und in eine Ruhestellung und in eine Arbeitsstellung schwenkbar ist, wobei das Stützrad in seiner Arbeitsstellung mit Druck mittig gegenüber den beiden Riemenantrieben am Baumstamm anliegt und in seiner Ruhestellung vom Baumstamm weg verschwenkt und arretiert ist.

In seiner Arbeitsstellung gewährleistet das Stützrad, dass die gegenüber liegenden Riemenantriebe mit Druck am Baumstamm anliegen und die Vorrichtung sich somit sicher längs des Baumstammes bewegen kann. In der Ruhestellung des Stützrades lässt sich die Vorrichtung nach erfolgter Entastung vom Baum entfernen und zum nächsten Baum transportieren.

Nachfolgend wird die Erfindung an Hand des in der Zeichnung dargestellten Ausführungsbeispiels näher erläutert und beschrieben. Es zeigen:
- Fig. 1: eine perspektivische Darstellung einer erfindungsgemäßen Vorrichtung in ihrer Ruhestellung,
- Fig. 2: eine Teilansicht des Profils der Riemenantriebe,
- Fig. 3: eine schematische Darstellung des mit den Messern der Vorrichtung abgedeckten Umfanges des Baumstammes,
- Fig. 4: eine erfindungsgemäße Vorrichtung in ihrer Arbeitsstellung an einem Baumstamm, und
- Fig. 5: eine schematische Darstellung der horizontalen Beweglichkeit der oberen Schneidvorrichtung

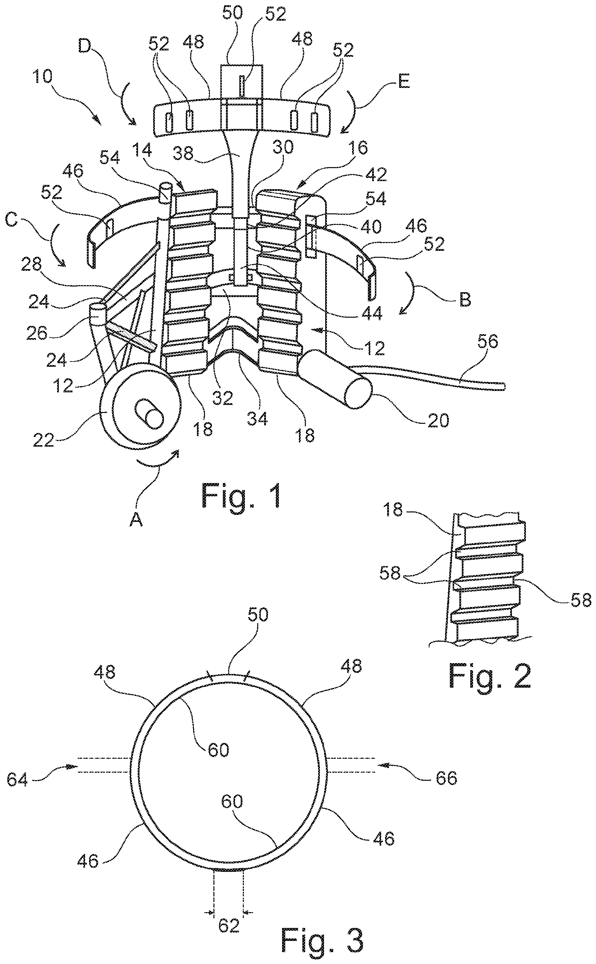

In Fig. 1 ist die Vorrichtung 10 in ihrer Ruhestellung dargestellt. Die Vorrichtung 10 umfasst einen zweiteiligen Grundkörper 12 mit jeweils einem Riemenantrieb 14 und 16. Die beiden Riemenantriebe 14 und 16 besitzen einen Treibriemen 18, der in der Arbeitsstellung der Vorrichtung 10 mit Druck am Baumstamm eines Baumes anliegt, so dass die Vorrichtung 10 am Baum herauf- und herunterfahren kann, wenn der Treibriemen 18 von einem gemeinsamen Hydraulikmotor 20 angetrieben wird.

Die Vorrichtung 10 umfasst ferner ein Stützrad 22, welches über Stangen 24 am Grundkörper 12 gehalten ist. Über eine Schubstange 28 kann das Stützrad 22 in Richtung des Pfeiles A über ein Gelenk 26 in seine Arbeitsposition verschwenkt werden, in der es mit Druck an einem Baumstamm anliegt.

Die beiden Grundkörper 12 sind über eine obere Platte 30 und eine mittlere Platte 32 miteinander fest verbunden. Die beiden Riemenantriebe 14 und 16 stehen dabei etwa in einem rechten Winkel zueinander.

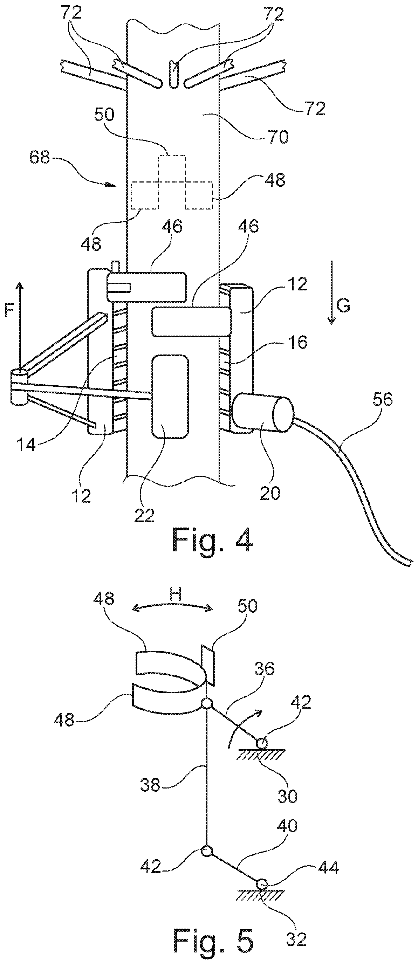

An der Platte 32 ist eine Messerstange 40 über ein Gelenk 42 befestigt. Die Messerstange 40 ist über ein weiteres Gelenk mit einer oberen Messerstange 38 verbunden, welche zusammen mit einer anderen Messerstange 36 (vgl. Fig. 5) die obere Schneidvorrichtung trägt.

Diese obere Schneidvorrichtung umfasst zwei seitliche Messer 48, welche in Richtung der Pfeile D und E in ihre Arbeitsstellung verschwenkbar sind. Oberhalb und zwischen den beiden Messern 48 befindet sich ein fest fixiertes drittes Messer 50.

Die untere Schneidvorrichtung umfasst zwei in vertikaler Richtung versetzt angeordnete Messer 46, die jeweils am Grundkörper 12 angeordnet sind. Beide Messer 46 sind in Richtung der Pfeile B und C über Gelenke 54 in ihre Arbeitsstellung verschwenkbar, in der sie unter der Einwirkung einer hier nicht dargestellten Feder mit Druck an einem Baumstamm anliegen. Auf ihrer inneren, dem Baumstamm zugewandten Seite, besitzen die Messer der oberen und unteren Schneidvorrichtung auswechselbare Distanzhalter 52, durch welche die in ihrer Arbeitsstellung mit Druck am Baumstamm liegenden Messer in einem geringen Abstand von beispielsweise 3 mm vom Baumstamm gehalten werden, um eine Beschädigung der Baumrinde durch die Messer zu vermeiden. Die Distanzhalter 52 sind an ihren oberen und unteren Enden etwas abgerundet, damit die Baumrinde beim Herauf- und Herunterfahren der Vorrichtung 10 nicht durch die Distanzhalter 52 beschädigt wird.

Über eine flexible Hydraulikleitung 56 wird der Hydraulikmotor 20 von einem nicht dargestellten Traktor gespeist. Der Hydraulikmotor 20 treibt beide Riemenantriebe 14 und 16 an, wobei der Grundkörper 12, an welchem der Hydraulikmotor 20 angeordnet ist, direkt angetrieben werden kann, während der andere linke Grundkörper 12 über eine ein Kegelrad enthaltende Getriebeanordnung,welche sich in einem Gehäuse 34 befindet, angetrieben wird. Wenn für den Antrieb der beiden Riemenantriebe 14 und 16 nur ein einziger Hydraulikmotor 20 vorgesehen ist, ist in vorteilhafter Weise auch nur eine einzige Hydraulikleitung 46 erforderlich. Außerdem bedeutet die Verwendung nur eines Hydraulikmotors 20 eine Gewichtsersparnis.

Fig. 2 zeigt in einem Ausschnitt einen Teil der Oberfläche der Riemenantriebe 14 und 16. Der Treibriemen 18 der Riemenantriebe 14 und 16 weist waagerecht verlaufende Vertiefungen 58 auf, wodurch der Treibriemen 18 insgesamt profiliert ausgebildet ist und die Vorrichtung 10 ohne die Gefahr eines Rutschens am Baumstamm verfahren kann. Als Material für den Treibriemen 18 wird vorzugsweise Gummi unterschiedlicher Härte verwendet. Je nach Beschaffenheit der Bäume wird bei glatten Rinden ein weiches Gummi verwendet und bei rauen Rinden ein härteres Gummi.

In Fig. 3 ist schematisch dargestellt, wie die Messer 46, 48 und 50 der unteren und oberen Schneidvorrichtung den Umfang 60 eines Baumes komplett erfassen. Die Endbereiche der beiden in horizontaler Richtung versetzt angeordneten Messer 46 überlappen sich in einem mit dicker Linie dargestellten Überlappungsbereich 62. In diesem Überlappungsbereich 62 liegen die Enden der Messer 46 wegen ihrer versetzten Anordnung ohne Berührung im vertikalen Abstand zueinander. Insgesamt decken die beiden Messer 46 in Fig. 3 einen ersten unteren Teil des Umfanges 60 ab.

Der noch verbleibende obere Teil des Umfanges 60 wird durch die Messer 48 und 50 erfasst, wobei die Endbereiche der beiden Messer 48 die darunter befindlichen Messer 46 geringfügig in Überlappungsbereichen 64 und 66 überlappen. Somit wird mit allen Messern 46, 48 und 50 der gesamte Umfang 60 eines Baumstammes erfasst.

Fig. 4 zeigt die Schneidvorrichtung 10 in ihrer Arbeitsstellung, wobei die Schneidvorrichtung 10 in Richtung des Pfeiles F an einem Baumstamm 70 eines Baumes 68 nach oben fährt, um Äste 72, die ringförmig in einer Ebene um den Baum 68 herum gewachsen sind, zu entfernen. Dabei kommt als erstes die obere Schneidvorrichtung, die sich in Fig. 4 auf der hinteren nicht sichtbaren Seite des Baumes 68 befindet zur Wirkung und entfernt die Äste 72 auf einem ersten Teil des Baumumfanges.

Beim weiteren Hochfahren in Richtung des Pfeiles F greifen dann die beiden versetzt angeordneten Messer 46 der unteren Schneidvorrichtung ein, welche die Äste 72 auf dem restlichen Teil des Baumumfanges entfernen, wobei zunächst das linke obere Messer 46 und danach das rechte untere Messer 46 eingreift. Wenn alle Äste 72 bis zu der gewünschten Höhe entfernt sind, wird die Vorrichtung 10 am Baum 68 in Richtung des Pfeiles G wieder nach unten zum Ausgangspunkt gefahren.

Das Laufrad 22 befindet sich in seiner Arbeitsstellung, in der es mit Druck am Baumstamm 70 anliegt, und dieser Druck sorgt dafür, dass auch die Riemenantriebe 14 und 16 gegen den Baum gedrückt werden. Um einen gleichmäßigen Anpressdruck für die beiden Riemenantriebe 14 und 16 zu ermöglichen, ist das Laufrad 22 mittig zwischen den beiden Riemenantrieben 14, 16 angeordnet, die sich in einem rechten Winkel zueinander befinden.

Die Riemenantriebe 14, 16 besitzen eine große Oberfläche, wodurch sich der Anpressdruck der Riemenantriebe 14,16 gegen die Baumrinde gering halten lässt. Dadurch kann eine Beschädigung der Baumrinde vermieden werden.

In der schematischen Zeichnung gemäß Fig. 5 ist dargestellt, dass die obere Scheidvorrichtung mit ihren Messern 48 und 50 nicht starr am Grundkörper 12 angeordnet, sondern als Ganzes gesehen in horizontaler Richtung gemäß dem Doppelpfeil H verschwenkbar ist. Wenn beim Hochfahren der Vorrichtung 10 das oberste Messer 50 der oberen Schneidvorrichtung auf einen von dem senkrechten abweichenden Verlauf des Baumstammes 70 in Form einer Verdickung oder einer leichten Krümmung trifft, gibt das obere Messer 50 nach, und passt sich dem Verlauf des Baumstammes an, indem es in Richtung vom Baumstamm weg schwenkt. Dadurch wird vermieden, dass die Baumrinde des Baumes 68 an der Stelle der Verdickung oder Krümmung durch die obere Schneidvorrichtung beschädigt wird.

Die horizontale Bewegbarkeit der oberen Schneidvorrichtung wird dadurch ermöglicht, dass sie über eine Messerstange 36 über das Gelenk 42 mit der Platte 30 verbunden ist. Außerdem ist die Messerstange 38 über das Gelenk 42 mit der Messerstange 40 verbunden, die ihrerseits über das Gelenk 44 an der Platte 32 befestigt ist. Dadurch wird nach Art eines Parallelogramms die horizontale Beweglichkeit der oberen Schneidvorrichtung ermöglicht.

### Bezugszeichenliste

- 10: Vorrichtung
- 12: Grundkörper
- 14: Riemenantrieb
- 16: Riemenantrieb
- 18: Treibriemen
- 20: Hydraulikmotor
- 22: Stützrad
- 24: Stangen
- 26: Gelenk
- 28: Schubstange
- 30: Platte
- 32: Platte
- 34: Gehäuse
- 36: Messerstange
- 38: Messerstange
- 40: Messerstange
- 42: Gelenk
- 44: Gelenk
- 46: Messer
- 48: Messer
- 50: Messer
- 52: Distanzhalter
- 54: Gelenk
- 56: Hydraulikleitung
- 58: Vertiefung
- 60: Umfang (des Baumes)
- 62: Überlappungsbereich
- 64: Überlappungsbereich
- 66: Überlappungsbereich
- 68: Baum
- 70: Baumstamm
- 72: Äste

- A: Pfeil
- B: Pfeil
- C: Pfeil
- D: Pfeil
- E: Pfeil
- F: Pfeil
- G: Pfeil
- H: Doppelpfeil

## Patentansprüche

1. Vorrichtung (10) zum Entasten lebender Bäume mit mindestens einer Schneidvorrichtung zum Abschneiden und Entfernen der Äste der Bäume, mit einem Grundkörper (12), mit einem eigenen Antrieb (14,16), mit einem Motor sowie mit in ihrer Arbeitsstellung am Baumstamm anliegenden Antriebsmitteln sowie ein in seiner Arbeitsstellung am Baumstamm anliegendes Stützrad (22), so dass die Vorrichtung (10) selbständig am Baumstamm des Baumes (68) herauf- und herunterfahren kann, wobei
- die Schneidvorrichtung eine erste untere Schneidvorrichtung und eine zweite darüber befindliche obere Schneidvorrichtung umfasst,
- die untere Schneidvorrichtung zwei einander gegenüberliegend angeordnete, kreisförmig verlaufende Messer (46) umfasst, die in vertikaler Richtung versetzt angeordnet sind,
- die beiden Messer (46) der unteren Schneidvorrichtung zusammen einen Kreisbogen bilden, der einen ersten Teil des Umfanges (60) des Baumstammes umfasst, wobei sich die Endbereiche der beiden Messer (46) in ihrer Arbeits- und Schneidstellung wegen der versetzten Anordnung der beiden Messer (46) überlappen können, wobei die Endbereiche der beiden Messer (46) in vertikaler Richtung gesehen übereinander liegen.
- die obere Schneidvorrichtung zwei einander gegenüberliegend angeordnete ebenfalls kreisförmig verlaufende Messer (48) umfasst, die sich in gleicher Ebene erstrecken,
- in der Mitte zwischen den beiden Messern (48) der oberen Schneidvorrichtung ein drittes Messer (50) oberhalb der beiden Messer (48) der oberen Schneidvorrichtung angeordnet ist,
- die drei Messer (48,50) der oberen Schneidvorrichtung zusammen einen Kreisbogen bilden, der einen zweiten Teil des Umfanges (60) des Baumstammes umfasst, so dass der gesamte Umfang (60) des Baumstammes an jeder Stelle entlang des zu entastenden Bereiches durch die Messer (46,48,50) der unteren und oberen Schneidvorrichtung erfasst ist.

2. Vorrichtung nach Anspruch 1, **dadurch gekennzeichnet, dass** die beiden einander gegenüber liegenden Messer (46,48) der unteren und oberen Schneidvorrichtung in eine vom Baumstamm wegweisende Ruhestellung verschwenkbar und arretierbar sind und in eine Arbeitsstellung verschwenkbar sind, in welcher sie durch eine Kraft gegen den Baumstamm gedrückt werden.

3. Vorrichtung nach Anspruch 2, **dadurch gekennzeichnet, dass** das dritte Messer (50) der oberen Schneidvorrichtung starr zwischen den beiden verschwenkbaren Messern (48) der oberen Schneidvorrichtung angeordnet ist, und dass die drei Messer (48,50) der oberen Schneidvorrichtung als eine Einheit zusätzlich als Ganzes in horizontaler Richtung bewegbar sind.

4. Vorrichtung nach einem der vorhergehenden Ansprüche 1 - 3, **dadurch gekennzeichnet, dass** die Messer (46,48,50) der unteren und oberen Schneidvorrichtung auf ihrer dem Baumstamm zugewandten Innenseite einen Distanzhalter aufweisen, durch welchen die Messer (46,48,50) in einem geringen Abstand von dem Baumstamm gehalten werden.

5. Vorrichtung nach Anspruch 4, **dadurch gekennzeichnet, dass** die Distanzhalter lösbar und auswechselbar an den Messern (46,48,50) befestigt sind.

6. Vorrichtung nach Anspruch 4, **dadurch gekennzeichnet, dass** der Abstand der Messer (46,48,50) von dem Baumstamm etwa 3 - 5 mm beträgt.

7. Vorrichtung nach Anspruch 1, **dadurch gekennzeichnet, dass** die Messer (46,48,50) der unteren und oberen Schneidvorrichtung auswechselbar am Grundkörper (12) der Vorrichtung angeordnet sind.

8. Vorrichtung nach Anspruch 1, **dadurch gekennzeichnet, dass** die Antriebsmittel durch zwei im Abstand parallel zueinander am Grundkörper (12) befestigte Riemenantriebe (14,16) gebildet sind, die von einem gemeinsamen am Grundkörper (12) angeordneten Hydraulikmotor angetrieben sind und mit Druck gegen den Baumstamm gedrückt werden.

9. Vorrichtung nach Anspruch 8, **dadurch gekennzeichnet, dass** der Hydraulikmotor über eine flexible Hydraulikleitung von einem Traktor aus mit dem erforderlichen Hydrauliköl und Druck versorgt wird.

10. Vorrichtung nach Anspruch 8, **dadurch gekennzeichnet, dass** Treibriemen (18) der beiden Riemenantriebe (14,16) profiliert ausgebildet und mit waagerecht verlaufenden Vertiefungen versehen sind.

11. Vorrichtung nach Anspruch 1 und 8, **dadurch gekennzeichnet, dass** das Stützrad (22) verschwenkbar am Grundkörper (12) befestigt ist und in eine Ruhestellung und eine Arbeitsstellung schwenkbar ist, wobei das Stützrad (22) in seiner Arbeitsstellung mit Druck mittig gegenüber den beiden Riemenantrieben (14,16) am Baumstamm anliegt und seiner Ruhestellung vom Baumstamm weg verschwenkt und arretiert ist.

## Claims

1. Device (10) for debranching living trees with at least one cutting device for cutting and removing the branches from the trees, with a base body (12), a drive unit (14, 16) of its own, and a motor, as well as driving means resting against the trunk in their operating position, as well as a supporting wheel (22) resting against the trunk in its operating position, so that the device (10) can move up and down the trunk of the tree (68) autonomously, wherein
- the cutting device comprises a first, lower cutting device and a second, upper cutting device located above the former,
- the lower cutting device comprises two circularly extending blades (46) arranged opposite each other, which are arranged to be offset in a vertical direction,
- the two blades (46) of the lower cutting device together form a circular arc encompassing a first part of the circumference (60) of the trunk, wherein end portions of the two blades (46) can overlap in their operating and cutting position due to the offset arrangement of the two blades (46), wherein the end portions of the two blades (46) lie one above the other when seen in a vertical direction,
- the upper cutting device comprises two oppositely arranged blades (48) likewise extending in a circular shape, which extend in the same plane,
- in the middle between the two blades (48) of the upper cutting device, a third blade (50) is arranged above the two blades (48) of the upper cutting device,
- the three blades (48, 50) of the upper cutting device together form a circular arc encompassing a second part of the circumference (60) of the trunk so that the entire circumference (60) of the trunk is grasped at any point along the area to be debranched by the blades (46, 48, 50) of the upper and lower cutting devices.

2. Device according to claim 1, **characterized in that** the two opposing blades (46, 48) of the upper and lower cutting devices can be pivoted into and are lockable in a rest position facing away from the trunk, and can be pivoted into an operating position in which they are pressed against the trunk by a force.

3. Device according to claim 2, **characterized in that** the third blade (50) of the upper cutting device is arranged rigidly between the two pivotable blades (48) of the upper cutting device, and that, in addition, the three blades (48, 50) of the upper cutting device as a unit can be moved as a whole in a horizontal direction.

4. Device according to any one of the preceding claims 1 to 3, **characterized in that** the blades (46, 48, 50) of the upper and lower cutting devices, on their inner side facing the trunk, have a spacer by means of which the blades (46, 48, 50) are kept at a short distance from the trunk.

5. Device according to claim 4, **characterized in that** the spacers are attached to the blades (46, 48, 50) in a detachable and exchangeable manner.

6. Device according to claim 4, **characterized in that** the spacing of the blades (46, 48, 50) from the trunk is about 3 to 5 mm.

7. Device according to claim 1, **characterized in that** the blades (46, 48, 50) of the upper and lower cutting devices are arranged on the base body (12) of the device to be exchangeable.

8. Device according to claim 1, **characterized in that** the driving means are formed by two belt drives (14, 16) attached on the base body (12) in parallel to one another at a spacing, which are driven by a common hydraulic motor arranged on the base body (12) and are pressed against the trunk by pressure.

9. Device according to claim 8, **characterized in that** the hydraulic motor is supplied with the required hydraulic oil and pressure via a flexible hydraulic line from a tractor.

10. Device according to claim 8, **characterized in that** driving belts (18) of the two belt drives (14, 16) are formed to be profiled and provided with horizontally extending recesses.

11. Device according to claims 1 and 8, **characterized in that** the supporting wheel (22) is attached to the base body (12) to be pivotable and can be pivoted into a rest position and an operating position, wherein the supporting wheel (22), in its operating position, rests against the trunk by pressure so as to be centered opposite the two belt drives (14, 16) and, in its rest position, is pivoted away from the trunk and locked.

## Revendications

1. Dispositif (10) d'ébranchage d'arbres vivants comprenant au moins un dispositif de coupe pour couper et enlever les branches des arbres, un corps de base (12), un entraînement propre (14, 16), un moteur et des moyens d'entraînement en contact avec le tronc d'arbre dans leur position de travail, et une roue d'appui (22) en contact avec le tronc d'arbre dans sa position de travail, de sorte que le dispositif (10) peut descendre et monter de façon autonome le long du tronc de l'arbre (68), dans lequel
- le dispositif de coupe comprend un premier dispositif de coupe inférieur et un deuxième dispositif de coupe supérieur se trouvant au-dessus,
- le dispositif de coupe inférieur comprend deux couteaux (46) circulaires agencés en opposition l'un de l'autre avec un décalage dans la direction verticale,
- les deux couteaux (46) du dispositif de coupe inférieur forment conjointement un arc de cercle qui entoure une première partie de la circonférence (60) du tronc d'arbre, les zones d'extrémité des deux couteaux (46) pouvant se chevaucher dans leur position de travail et de coupe en raison de l'agencement décalé des deux couteaux (46), et les zones d'extrémité des deux couteaux (46) se trouvant l'une au-dessus de l'autre, vues dans une direction verticale,
- le dispositif de coupe supérieur comprend deux couteaux (48) également circulaires, agencés en opposition l'un de l'autre, qui s'étendent sur le même plan,
- un troisième couteau (50) est agencé au-dessus des deux couteaux (48) du dispositif de coupe supérieur, dans le milieu entre les deux couteaux (48),
- les trois couteaux (48, 50) du dispositif de coupe supérieur forment conjointement un arc de cercle qui entoure une deuxième partie de la circonférence (60) du tronc d'arbre, de sorte que la totalité de la circonférence (60) du tronc d'arbre est englobée, en tout endroit le long de la zone à débrancher, par les couteaux (46, 48, 50) des dispositifs de coupe inférieur et supérieur.

2. Dispositif selon la revendication 1, **caractérisé en ce que** les deux couteaux (46, 48) des dispositifs de coupe supérieur et inférieur, situés en opposition l'un de l'autre, peuvent être pivotés et bloqués dans une position de repos éloignée du tronc d'arbre, et pivotés jusque dans une position de travail dans laquelle ils sont pressés contre le tronc d'arbre sous l'effet d'une force.

3. Dispositif selon la revendication 2, **caractérisé en ce que** le troisième couteau (50) du dispositif de coupe supérieur est agencé de manière fixe entre les deux couteaux (48) pivotables du dispositif de coupe supérieur, et **en ce que** les trois couteaux (48, 50) du dispositif de coupe supérieur peuvent être additionnellement déplacés comme un tout dans la direction horizontale en tant qu'unité.

4. Dispositif selon l'une quelconque des revendications précédentes 1 à 3, **caractérisé en ce que** les couteaux (46, 48, 50) des dispositifs de coupe inférieur et supérieur présentent, sur leur côté intérieur orienté vers le tronc d'arbre, une entretoise au moyen de laquelle les couteaux (46, 48, 50) sont maintenus à une faible distance du tronc d'arbre.

5. Dispositif selon la revendication 4, **caractérisé en ce que** l'entretoise peut être fixée sur les couteaux (46, 48, 50) de manière détachable et interchangeable.

6. Dispositif selon la revendication 4, **caractérisé en ce que** la distance entre les couteaux (46, 48, 50) et le tronc d'arbre est d'environ 3 à 5 mm.

7. Dispositif selon la revendication 1, **caractérisé en ce que** les couteaux (46, 48, 50) des dispositifs de coupe inférieur et supérieur sont agencés de manière interchangeable sur le corps de base (12) du dispositif.

8. Dispositif selon la revendication 1, **caractérisé en ce que** les moyens d'entraînement sont constitués par deux entraînements par courroie (14, 16) fixés à distance parallèlement l'un à l'autre sur le corps de base (12), qui sont entraînés par un moteur hydraulique commun agencé sur le corps de base (12) et sont pressés contre le tronc d'arbre sous l'effet d'une pression.

9. Dispositif selon la revendication 8, **caractérisé en ce que** le moteur hydraulique est alimenté en huile hydraulique et à la pression requise via un conduit hydraulique flexible provenant d'un tracteur.

10. Dispositif selon la revendication 8, **caractérisé en ce que** les courroies d'entraînement (18) des deux entraînements par courroie (14, 16) sont constituées de manière profilée et sont pourvues de renfoncements s'étendant dans la direction horizontale.

11. Dispositif selon les revendications 1 et 8, **caractérisé en ce que** la roue d'appui (22) est fixée sur le corps de base (12) de manière pivotable et peut être pivotée jusque dans une position de repos et jusque dans une position de travail, dans lequel la roue d'appui (22), dans sa position de travail, est en contact avec le tronc d'arbre, sous l'effet d'une pression, au milieu par rapport aux deux entraînements par courroie (14, 16), et, dans sa position de repos, elle est pivotée et bloquée en étant éloignée du tronc d'arbre.
